# EUROPEAN PATENT SPECIFICATION

(11) **EP 4 023 779 B1**
(45) Date of publication and mention of the grant of the patent: **12.02.2025**
(21) Application number: 20771183.9
(22) Date of filing: 11.03.2020
(51) Int. Cl.: C21D 9/70, C22B 9/20, C22B 9/18, C22C 27/02, C22B 9/00, C22B 9/04, C22C 19/05, C22C 38/06, C22C 38/12, C22C 38/14

(54) **SMELTING PROCESS FOR HIGH-NIOBIUM HIGH-TEMPERATURE ALLOY**
SCHMELZVERFAHREN FÜR EINEN NIOBREICHEN GROSSEN GUSSBLOCK AUS EINER HOCHTEMPERATURLEGIERUNG
PROCÉDÉ DE FUSION POUR LINGOT COULÉ DE GRANDE TAILLE EN ALLIAGE À HAUTE TEMPÉRATURE À HAUTE TENEUR EN NIOBIUM

(30) Priority: 28.08.2019 CN 201910803960
(43) Date of publication of application: 06.07.2022
(73) Proprietor: Gaona Aero Material Co., Ltd., Haidian Beijing 100081 (CN); Fushun Special Steel Shares Co., Ltd., Wanghua District Fushun, Liaoning 113000 (CN)
(72) Inventor: HUANG, Shuo, Beijing 100081 (CN); ZHAO, Guangpu, Beijing 100081 (CN); ZHANG, Beijiang, Beijing 100081 (CN); DUAN, Ran, Beijing 100081 (CN); QIN, Heyong, Beijing 100081 (CN); LI, Lianpeng, Fushun Liaoning 113000 (CN); CHOU, Yingyu, Fushun Liaoning 113000 (CN); QI, Chao, Fushun Liaoning 113000 (CN)
(74) Representative: Dr. Gassner & Partner mbB
(86) International application number: PCT/CN2020/078718
(87) International publication number: WO 2021/036225

(56) References cited:
- EP-A1- 2 039 789
- EP-A1- 2 314 725
- EP-A1- 3 109 331
- EP-A1- 3 325 680
- EP-A2- 2 835 434
- WO-A1-2013/089218
- CN-A- 1 165 205
- CN-A- 1 503 850
- CN-A- 106 676 299
- DE-A1- 102018 009 375
- US-A1- 2006 075 624
- CHOUDHURY A: "STATE OF THE ART OF SUPERALLOY PRODUCTION FOR AEROSPACE AND OTHER APPLICATION USING VIM/VAR OR VIM/ESR", ISIJ INTERNATIONAL, TOKYO, JP, vol. 32, no. 5, 1 January 1992 (1992-01-01), pages 563 - 574, XP000600856
- SCHOLZ, H.; BIEBRICHER, U.; BRUCKMANN, G.; ESSER, D.: "ESR Meets the Requirements for Big Forgings", IRON & STEEL, vol. 48, no. 10, 14 October 2013 (2013-10-14), pages 82 - 87, XP009526405, DOI: 10.13228/j.boyuan.issn0449-749x.2013.10.015

## Description

### TECHNICAL FIELD

This application relates to the field of a Nb superalloy ingot, and more particularly, to a Nb superalloy ingot and a smelting process thereof.

### BACKGROUND

With the improvement of a thermal efficiency and the increase of power of a gas turbine, a turbine disk of an advanced heavy-duty gas turbine with the power greater than 200MW gradually upgrades from alloy steel to superalloy regarding its material. Compared with the alloy steel, a yield strength of the superalloy at 500°C is increased by 40% or above, and a creep rupture strength at 550°C after 100000h is increased by 300% or above. It can significantly improve the strength of the disk of the heavy-duty gas turbine at high temperature and after long time, which is advantageous to simplify the structure and improves reliability and thermal efficiency of the gas turbine.

The size of the disk of the heavy-duty gas turbine generally exceeds 2000mm, which requires a forged piece having a weight above 10 tons, and an ingot having a weight above 15 tons. The turbine disc as prepared should reliably service for more than 100,000h in a service environment, which puts forward high requirements on metallurgical quality of the ingot.

For Alloy 706 and Alloy 718 containing more than 3% of Nb, a triple-melt process including steps of "vacuum induction melting (VIM) + electroslag remelting (ESR) + consumable vacuum arc remelting (VAR)" is generally adopted to produce a large superalloy ingot case having a weight of 10 tons or above in Europe and United States. For example, US patent publication No. US 20020170386A1 discloses the triple-melt process of the large ingot case made of Alloy 718 and any alloys having diameters greater than 762mm. During the triple-melt process, the ingot case needs to accommodate an electrode having a given diameter, and this patent gives several examples of the ingot case and the electrode accommodating each other.

For a superalloy VAR ingot having a weight greater than 15 tons, taking into account the loss during the triple-melt process (polishing the electrode and cutting a head and a tail of the electrode), the weight of a VIM ingot should exceed 20 tons, which puts forward higher requirement on the equipment of a VIM furnace and an ESR furnace. At present, a main technical bottleneck of producing the large superalloy ingot case having a weight of 15 tons or above in China is that there is no VIM equipment having a nominal capacity greater than 20 tons, therefore it is impossible to prepare single VIM billet having a weight of 20 tons or above. In order to solve this problem and accommodate to the equipments in China, the VIM furnace can only be used to cast two VIM ingots having the weight of 10 tons for each, and during two-arm ESR, two short electrodes having small-tonnage are used to prepare a superalloy electroslag ingot having large-tonnage which is then used in subsequent VAR.

Due to the high degree of alloying, alloys such as Alloy 706 and Alloy 718 are very sensitive to smelting parameters of VAR, and metallurgical defects such as experiencing black and white freckles can be created easily due to the fluctuation of parameters, therefore stable smelting parameters of VAR are required. In addition, using the two-arm ESR method to prepare a large-sized ESR ingot is likely to form a series of quality defects such as injection, overflow of molten steel, fluctuation of composition and inclusion during exchanging the electrode, which cannot be completely eliminated even by subsequent diffusion annealing at high temperature and electrode forging. In the subsequent VAR process, when smelting till the electrode site, the above quality defects will cause the fluctuation of the smelting parameters, thereby affecting the metallurgical quality of the VAR ingot.

Patent EP2314725A1 discloses a method of producing a nickel base alloy includes casting the alloy within a casting mold and subsequently annealing and overaging the ingot at at least 1200°F (649°C) for at least 10 hours. The ingot is electroslag remelted at a melt rate of at least 8lbs/min (3.63kg/min), and the ESR ingot is then transferred to a heating furnace within 4 hours of complete solidification and is subjected to a post-ESR treatment. A suitable VAR electrode is provided from the ESR ingot, and the electrode is vacuum remelted at a melt rate of 8 to 11 lbs/minute (3.63 to 5kg/minute) to provide a VAR ingot. The method allows premium quality VAR ingots having diameters greater than 762 mm (30 inches) to be prepared from Alloy 718 and other nickel base superalloys subject to significant segregation on casting. Patent EP3325680 A1 discloses a method of melting and refining an alloy comprises vacuum induction melting starting materials to provide a vacuum induction melted alloy. At least a portion of the vacuum induction melted alloy is electroslag remelted to provide an electroslag remelted alloy. At least a portion of the vacuum arc remelted alloy is vacuum arc remelted to provide a singly vacuum arc remelted alloy. At least a portion of the singly vacuum arc remelted alloy is vacuum arc remelted to provide a doubly vacuum arc remelted alloy. In various embodiments, a composition of the vacuum induction melted alloy comprises primarily one of vanadium, chromium, manganese, iron, cobalt, nickel, copper, niobium, molybdenum, technetium, ruthenium, rhodium, palladium, silver, tantalum, tungsten, rhenium, osmium, iridium, platinum, and gold.

### SUMMARY

In view of the deficiencies present in the prior art, a first object of the present invention is to provide a smelting process of a Nb superalloy ingot which can effectively solve the problem of black and white freckles formed by increased segregation due to the enlargement of the diameter or weight of the Nb superalloy ingots, the cracking of the steel ingot caused by large thermal stress, and the problem that the weight of the steel ingot cannot be increased due to the limitation of the tonnage of an electrode arm of ESR equipment, so that it can realize the preparation of the Nb superalloy ingot with the weight of 15 tons or above and the diameter of 800mm or above, while preventing the generation of black and white freckles to the outermost, reducing the degree of element segregation, and effectively preventing the steel ingot from cracking.

A second object of this application is to provide a Nb superalloy ingot having a weight of at least 15 tons and free from hot-cracking, black and white freckles, or burning loss of Al and Ti. Upon non-destructive examination, it is found that there is no abnormal signal at the site where the electroslag is remelted in bars forged from such ingots.
For achieving the above objects, this application provides the following technical solution: a smelting process of a Nb superalloy ingot including the following steps: vacuum induction melting (VIM): conducting VIM on pure metal raw material and/or recycled material as raw material, and pouring to form a plurality of VIM ingots with the same composition; electroslag remelting (ESR): preparing the same number of electroslag electrodes as that of the prepared VIM ingots; and electroslag remelting all the prepared electroslag electrodes under protection of argon, followed by cooling down and demoulding to obtain an ESR ingot; and conducting consumable vacuum arc remelting (VAR) for a plurality of times: performing a first annealing and a second annealing on the obtained ESR ingot and forging by stretching to a predetermined size to obtain a primary consumable electrode, in which the second annealing is performed at a temperature higher than that for the first annealing temperature; and performing VAR for at least twice by using the primary consumable electrode as starting material, in which, a resulting VAR ingot obtained after each VAR is used as a consumable electrode to be used in a next VAR, with a diameter of the resulting VAR ingot being increased after each VAR until fluctuation of a melting rate during a last VAR fall within ±10% of a steady-state melting rate, and a VAR ingot obtained in the last VAR is used to prepare an ingot with a target diameter; wherein in the step of VIM, the raw material contains 2.8-5.5wt% Nb, 0.2-1.0wt% Al and 0.5-2.0wt% Ti; in the step of VIM, the raw material is melt at a temperature of 1300-1550°C until melting down, refined under electromagnetic stirring at 1350-1550°C for 15-120min, cooled for 1-10h, and demoulded to obtain the VIM ingot; and the VIM process is performed for a plurality of times to obtain a plurality of VIM ingots with the same composition;
   a quaternary slag system (CaF₂-CaO-Al₂O₃-TiO₂) comprising 60-75wt% CaF₂, 10-25wt% CaO, 10-25wt% Al₂O₃, and 1-10wt% TiO₂ is adopted;
   a steady-state melting rate of ESR is controlled to be 5-15kg/min,
   before exchanging each electrode, when the remaining weight of one electrode is 500kg-1000kg, the melting rate is increased by a slope of 0.5-2kg/min to 12-25kg/min on the basis of the steady-state melting rate and kept stable until the electrode exchanging begins, during which the smelting parameters remain the same as those before the exchanging and the exchanging time does not exceed 2 min; after exchanging each electrode, the melting rate is reduced by a slope of 0.5-2kg/min to a steady-state melting rate of 5-15kg/min for continuing the remelting when 100kg-500kg of a next electrode is melted, and hot topping is carried out when the remaining weight of a last electrode is 200-600kg; and
   after ESR, cooling down is carried out for 2-10h and demoulding is carried out to obtain the ESR ingot;
in the step of VAR for a plurality of times, performing the first annealing and the second annealing on the obtained ESR ingot and forging by stretching to a predetermined size to obtain the primary consumable electrode includes the following steps of:
   initiating the first annealing to the ESR ingot within 0.5-2h after demoulding, in which the temperature is initially raised to 300-550°C, kept constant for 12-32h for achieving homogeneous temperature distribution, raised to 600-750°C at a rate of 1-25°C/h, kept constant for 4-32h, raised to 800-1000°C at a rate of 5-35°C/h, kept constant for 4-32h, lowered to 550-750°C at a rate of 1-35°C/h, and kept constant for 4-32h, followed by air cooling;
   performing the second annealing on the ESR ingot after the first annealing, in which the temperature is raised to 800-1000°C at a rate of 5-35°C/h, raised to 1050-1150°C at a rate of 1-25°C/h, kept constant for 4-32h, raised to 1150-1250°C at a rate of 1-25°C/h, kept constant for 24-72h, lowered to 800-950°C at a rate of 1-35°C/h, and kept constant for 4-32h, followed by air cooling;
   forging the ESR ingots after the second annealing, in which the ESR ingot is heated to 1100-1180°C for 4-12h before forging, and subjected to a free forging on a high-speed forging press of 3000 tons or above by stretching in one direction, in which a reduction per pass in one direction is 5-30mm and a final forging temperature is in a range of 850-1000°C; and
   polishing the ingots stretched during free forging and flattening at the head and the tail to obtain the primary consumable electrode;
in the step of VAR for a plurality of times, a first VAR and a second VAR comprising the following steps of: performing the first VAR at a steady-state melting rate of 3.5-7.5kg/min; initiating helium cooling when 800-2000kg of the primary consumable electrode is melted; decreasing a current and adjusting the melting rate to 3.0-7.0kg/min when the weight of the remained primary consumable electrode is 1500-5000kg; and starting hot topping when the weight of the remained primary consumable electrode is 200-1000kg, thereby obtaining a first VAR ingot;
   for the second VAR, first polishing the first VAR ingot, and flattening the first VAR ingot at the head and the tail to obtain a secondary consumable electrode;
   performing the second VAR at a steady-state melting rate of 4.0-8.5kg/min; initiating helium cooling when 1000-3000kg of the secondary consumable electrode is melted; decreasing the current and adjusting the melting rate to 3.0-7.5kg/min when the weight of the remained secondary consumable electrode is 2000-5500kg; and starting hot topping when the weight of the remained secondary consumable electrode is 250-1500kg; and
after the second VAR, vacuum cooling for 1-8h and then starting stress-relief annealing within 2h, wherein the temperature is raised to 300-750°C, kept constant for 4-32h for achieving homogeneous temperature distribution, raised to 800-1000°C at a rate of 5-50°C/h, kept constant for 4-32h, lowered to 550-750°C at a rate of 1-35°C/h, and kept constant for 4-32h, followed by air cooling;
wherein the Nb superalloy ingot is an Alloy 706 with a diameter of 800mm or above, by mass percentage, having a chemical composition of: C≤0.02%, Cr 15.5-16.5%, Ni 40.0-43.0%, Nb 2.8-3.2%, Ti 1.5-1.8%, Al 0.1-0.3%, Si≤0.10%, Mn≤0.20%, P≤0.015%, S≤0.0013%, Co≤ 0.30%, Mo≤0.20%, B≤0.006%, Cu≤0.30%, Ca≤0.005%, N≤0.006%, O≤0.005%, and Fe the balance; or the Nb superalloy ingot is an Alloy 718 with a diameter of 80mm or above, by mass percentage, having a chemical composition of: C 0.005-0.04%, Cr 17.0-19.0%, Ni 52.0-55.0%, Nb 4.9-5.5%, Ti 0.75-1.15%, Al 0.35-0.65%, Si≤0.10%, Mn≤0.15%, P≤0.008%, S≤ 0.002%, Co≤0.50%, Mo 2.8-3.3%, B≤0.006%, Cu≤0.10%, Ca≤0.005%, N≤0.01%, O≤ 0.003%, and Fe the balance.

In the above technical solution, for addressing the problem of insufficient capacity of VIM equipment, a VIM furnace with a conventional tonnage (such as 12 tons) is used to prepare a plurality of VIM ingots with the same composition (which also reduces the requirement for the weight of single VIM ingot), thereby preparing a plurality of electroslag electrodes, and then ESR is carried out to prepare the ESR ingot with higher tonnage, which is then subjected to VAR for a plurality of times. In this way, the first VAR can improve the smelting quality of the site where the electrode is exchanged, and the second or more VAR can thoroughly addressing the quality defects suffered during smelting, so as to prepare the consumable large-sized superalloy ingot with the weight of at least 15 tons which is of premium quality and free from metallurgical detects. In view of the loss, the total weight of a plurality of VIM ingots should be 125% to 160% of the desired weight of the ingot.

In a preferred embodiment, in the step of VIM, the raw material contains 0.2-1.0wt% Al and 0.5-2.0wt% Ti.

In fact, when a single VIM ingot has the diameter greater than 800mm and the weight greater than 10 tons, high thermal stress will be generated in the large-sized high-Nb superalloy VIM ingot during solidification after casting. This is especially true for an age precipitated alloy containing Al and Ti, in which the strengthened phase will be precipitated after cooling to a temperature within an aging precipitation temperature range of a strengthened phase, which will generate greater structural stress, or in severer situation, cause the steel ingot to crack directly. However, too short demoulding time will lead to uncomplete solidification of the steel ingot, which is prone to cracking due to earlier demoulding.

In view of this, in a preferred embodiment, the electroslag electrode is prepared as follows: directly stress-relieve annealing each VIM ingot, in which the temperature is initially raised to 600-800°C, then raised to 800-1000°C at a rate of 5-45°C/h, kept constant for 4-32h, lowered to 600-800°C at a rate of 1-35°C/h and kept constant for 4-32h; air cooling; polishing; and flattening at the head and the tail to obtain the electroslag electrode. Generally, a diameter of the obtained electroslag electrode should match a diameter of a matching crystallizer of the VAR furnace used in the VAR step, that is, ratio of the diameter of a matching crystallizer to the diameter of the electrode, i.e., a filling ratio, should be a proper range, i.e. about 0.8-0.9.

In the above technical solution, directly stress-relieve annealing VIM ingots provides the following advantages: firstly, it can timely prevent the generation of extremely large structural stress in the steel ingot after demoulding due to the temperature falling into the range of the aging precipitation during air cooling; secondly, the steel ingot can be heated at the reasonable rate, which can avoid the generation of high thermal stress between the inside and outside of the steel ingot which, otherwise, would be generated due to low thermal conductivity of a superalloy; thirdly, keeping the temperature at 800-1000°C for a certain time can thoroughly and evenly heat the steel ingot so as to release internal stress during solidification; and fourthly, slowly cooling down at the rate of 1-35°C/h and keeping the temperature constant at 600-800°C for a certain time can effectively prevent the regeneration of high thermal stress and structural stress in the steel ingot.

The content of TiO₂ in the electroslag can be controlled to be 1-10wt%, which can solve the problem of burning loss of Ti at the head and tail of the ESR ingot. For ingot cases having a diameter greater than 1000mm, the steady-state melting rate during ESR is controlled to be 5-15kg/min, and the melting rates before and after exchanging the electrode are adjusted, so that the depth of a molten bath during exchanging the electrode can be reasonably increased, which can solve the problem of reduced fluidity of the molten bath caused by the suspension of smelting during exchanging the electrode, reduce the disturbance to the molten bath caused by the instantaneous embedding of the electrode into the slag bath, and reduce metallurgical quality defects due to inclusion, continued pouring, etc.

For the obtained high-Nb superalloy ESR ingot with a diameter of 1000mm or above, the thermal stress during solidification is extremely high, therefore the ESR ingot is very prone to cracking; since the raito of the diameter of the primary consumable electrode and that of the corresponding crystallizer, that is, the filling ratio, should be a reasonable range, the large-sized ESR ingot cannot be directly used for the first VAR, and thus the free forging is required for reducing the diameter to, for example, 800-900mm; and as the diameter of the ESR ingot is very large, a segregation during solidification and, in turn, dendrite segregation and low-melting-point phases between dendrites will significant, leading to extremely poor thermoplasticity.

To solve the problem that the high-Nb superalloy ESR ingot with the diameter of 1000mm or above has high thermal stress, in this application, a water-cooled crystallizer in the ESR furnace is used after ESR for cooling for 2-10h such that the steel ingot is thoroughly solidified and cooled to a temperature below the aging precipitation temperature, and the first annealing is initiated within 0.5-2h after demoulding. During the first annealing, the temperature is initially raised to 300-550°C so as to avoid extremely high thermal stress caused by high temperature, and then kept at 300-550°C for 12-32h so as to achieve homogeneous temperature distribution. Then the temperature is raised to 600-750°C at a rate of 1-25°C/h, kept constant for 4-32h, raised to 800-1000°C at a rate of 5-35°C/h, kept constant for 4-32h, lowered to 550-750°C at a rate of 1-35°C/h, and kept constant for 4-32h, followed by air cooling. By means of the first annealing, the thermal stress generated by a temperature gradient during the solidification of the electroslag ingot can be released, and at the same time, the generation of a structural stress can be avoided by using an over-aging treatment to coarsen the strengthened phase, thereby preventing direct cracking of the large-sized superalloy ESR ingot after demoulding.

For the purpose of improving the thermoplasticity of high-Nb superalloy ESR ingot with a diameter of 800mm or above, a second annealing, that is, a diffusion annealing at high temperature should be performed to the ESR ingot after the first annealing. In order to avoid extremely high thermal stress, the heating rate should be strictly controlled. Therefore, the ESR ingot is loaded into the furnace at the temperature of 550-750°C or below and held at the temperature for 4-24h, heated to 800-1000°C at a rate of 5-35°C/h, heated to 1050-1150°C at a rate of 1-25°C/h and held at the temperature for 4-32h, heated to 1150-1250°C at a rate of 1-25°C/h and held at the temperature for 24-72h, and cooled to 800-950°C at a rate of 1-35°C/h and held at the temperature for 4-32h, following by air cooling. By adopting a multi-stage slow heating, the generation of extremely high thermal stress in the ingots and cracking thus brought about can be prevented. In addition, the high-temperature and long-time diffusion annealing can re-dissolve the low-melting-point phases in the alloy and alleviate dendrite segregation, thereby improving the thermoplasticity of the steel ingot and providing a steel ingot with high thermoplasticity for preparing consumable electrodes used in subsequent forging process.

In the process of the first VAR, the volume of the ingot will be reduced during solidification, and there will be a gap between the ingot and the crystallizer, such that the steel ingot cannot directly contact an outer wall of the crystallizer under vacuum to achieve heat dissipation, therefore the helium is introduced for heat conduction. In the early stage of smelting, the steel ingot can dissipate heat to the crystallizer at the bottom, but heat dissipation through the bottom is limited when the smelting proceeds a certain stage, therefore it is necessary to introduce a proper amount of helium when the smelting reaches a certain stage. Too much helium will break the molten bath which impairs the stability of smelting, while too little helium will not provide sufficient cooling effect. Regarding an oversized ingot, the more the ingot solidifies, the greater the heat capacity is and the more difficult the heat conduction is. Therefore, at the late stage of smelting, it is necessary to appropriately reduce the melting rate and stabilize the depth of the molten bath, so as to reduce the probability of forming metallurgical defects. Judging the time for stating hot topping based on the weight of the remained primary consumable electrode can save the amount of the steel ingot to be removed and increase the yield.

In the process of the first VAR, as the primary consumable electrode is forged from the ESR ingot prepared by electroslag remelting of a plurality of VIM ingots, there will be fluctuation of smelting quality at the site where the electrode is exchanged, which cannot be thoroughly eliminated even by diffusion annealing at high temperature and forging. Since the VAR process is very sensitive to the quality of the electrode, it is likely to incur abnormal problems such as fluctuation of melting rate and mass collapse of the electrode when the smelting proceeds to the site where the electrode is exchanged, thereby forming metallurgical defects such as black and white freckles, which cannot be eliminated by subsequent diffusion annealing at high temperature, forging or heat treatment, and even cause direct scrapping of the bars or forged parts as prepared in severe situations. Therefore, in this application, the first VAR ingot is polished and flattened at the head and the tail for preparing a secondary consumable electrode for use in the second VAR. As large thermal stress will be generated in a steel ingot having a diameter greater than 800mm after the second VAR, vacuum cooling is required after the second VAR and a stress-relief annealing is carried out within 2h so as to prevent the steel ingot from cracking after demoulding, in which the temperature should be initially raised to 300-750°C, kept constant for 4-32h for achieving homogeneous temperature distribution, raised to 800-1000°C at a rate of 5-50°C/h, kept constant for 4-32h, lowered to 550-750°C at a rate of 1-35°C/h, and kept constant for 4-32h, followed by air cooling. In this way, the thermal stress generated by the temperature gradient during the solidification of the electroslag ingot can be released, and at the same time, the generation of structural stress can be avoided by the coarsening of strengthened phase via over-aging treatment, thereby inhibiting direct cracking of the large-sized superalloy ESR ingot after demoulding.

In a preferred embodiment, if fluctuation of the melting rate during the second VAR is beyond ±10% of the steady-state melting rate, an obtained second VAR ingot is used to prepare a consumable electrode to be used for a next VAR by the same way as for preparing the primary consumable electrode, including the same first annealing, second annealing, and forging by stretching, and then the second VAR is repeated. Generally, a diameter of the obtained next consumable electrode should match a diameter of a matching crystallizer of the VAR furnace used in a next VAR.

This application has the following advantages.
1. It can break through the limitation to the tonnage of VIM furnace and ESR furnace under atmosphere protection by preparing a plurality of electrodes by using VIM furnace with a conventional tonnage (such as 12 tons), then smelting a plurality of VIM ingots into one ESR ingot by exchanging the electrode in an ESR furnace, and using the same to prepare the VAR ingot having the weight of at least 15 tons.
2. It can prepare a superalloy ESR ingot having a weight of 20 tons by ESR by using the ESR furnace with limited electrode arm tonnage.
3. The smelting stability during the first VAR can be significantly improved by subjecting ESR ingot prepared by ESR to diffusion annealing at high temperature to improve the thermoplasticity, and preparing a consumable electrode with a suitable diameter by using free forging to stretch the billet.
4. The problem of metallurgical defects such as inclusion at the site where the electrode is exchanged during ESR can be effectively addressed by using the secondary consumable electrode prepared by the first VAR ingot for the second VAR, and, where necessary, performing VAR for a plurality of times, so that the high-niobium superalloy consumable ingot with a diameter of 800mm or above and a weight greater than 15 tons and free from metallurgical defects can be prepared.

### DESCRIPTION OF THE EMBODIMENTS

This application will be described in detail below in combination with examples.

### Example One

This example is used to illustrate a method for preparing Alloy 706 (a VAR ingot with a diameter of 1050mm).

The target Alloy 706 had a composition of (by mass percentage):
C 0.018%, Cr 15.8%, Ni 41.5%, Nb 3.01%, Ti 1.72%, Al 0.25%, Si 0.02%, Mn 0.01%, P 0.006%, S 0.0006%, Co 0.02%, Mo 0.01%, B 0.004%, Cu 0.02%, Ca 0.004%, N 0.005%, O 0.002%, and the balance Fe.

The specific method for preparing the alloy was as follow.

Vacuum induction melting (VIM): according to the requirements of composition of the designed alloy, recycled material accounting for 50% of the elements needed for alloy of unit weight, was weighed, and fresh metals accounting for the rest of the weight were weighed. A 12-ton VIM furnace was adopted, with an upper melting temperature limit being 1550°C. After melting down, the composition of molten steel was detected, and the molten steel was controlled to contain approximately 3.02wt% Nb, approximately 1.80wt% Ti, and approximately 0.30wt% Al by adding fresh metals. According to the amount of the added fresh metal, refining was carried out under electromagnetic stirring at 1350°C for 15-30min, and tapping was conducted at a temperature of 1400°C. After pouring the molten steel, furnace cooling was carried out for 4h and demoulding was carried out to obtain one VIM ingot with a diameter of 820mm and a weight of 12 tons which was directly annealed. An annealing furnace was pre-heated to 600°C, heated to 800°C at a rate of 5°C/h and held at the temperature for 24h, cooled to 600°C at a rate of 1°C/h and held at the temperature for 10h, and then air-cooled.

The annealed VIM ingot was polished and flattened at the head and the tail to prepare an electroslag electrode.

Electroslag remelting (ESR): A crystallizer with a diameter of 1100mm was adopted and a quaternary (CaF₂-CaO-Al₂O₃-TiO₂) slag system specifically having a composition of, by weight, 60% CaF₂, 10% CaO, 25% Al₂O₃, and 10% TiO₂ was adopted. A steady-state melting rate was 15kg/min. During smelting, Ar at 0.2 bar pressure was introduced for protection, so as to prevent the molten steel from contacting with oxygen and nitrogen in the air. Before exchanging the electrode, when the weight of the remained first electrode was 800kg, the melting rate was increased by 1.05kg/min to 25kg/min on the basis of the steady-state melting rate by adjusting input power and a voltage and was held until the electrode exchanging began. Smelting parameters during exchanging the electrode remained the same as those before exchanging the electrode, and the time for exchanging did not exceed 2min. After exchanging the electrode, when 100kg of a second electrode was melted, the melting rate was decreased by 0.50kg/min to 10kg/min by adjusting the input power and the voltage, and hot topping was carried out when the weight of the remained second electrode was 200kg.

After ESR, an ESR ingot was water cooled in a water-cooled crystallizer in the furnace for 4h, and within 0.5h after demoulding, transferred to an annealing furnace for stress-relief annealing. The annealing furnace was pre-heated to 300°C and held at the temperature for 12h, heated to 600°C at a rate of 5°C/h and held at the temperature for 4h, heated to 800°C at a rate of 5°C/h and held at the temperature for 5h, cooled to 600°C at a rate of 5°C/h and held at the temperature for 12h, and then air-cooled.

Diffusion annealing ESR ingot at high temperature: The ESR ingot was loaded into the furnace at the temperature of 550°C or below and held at the temperature for 4h, heated to 800°C at a rate of 10°C/h, heated to 1050°C at the rate of 5°C/h and held at the temperature for 4h, heated to 1150°C at the rate of 5°C/h and held at the temperature for 24h, cooled down to 800°C at the rate of 5°C/h and held at the temperature for 32h, and then air cooled.

Forging the electrode: The ESR ingot with a diameter of 1100mm was heated to 1100°C for 4h before forging. A free forging was performed on a 3500-ton high-speed forging press by stretching the ingot in one direction, in which reduction per pass in one direction was controlled to be 25mm, and the final forging temperature was 850°C. Finally, the ESR ingot was polished and flattened at the head and the tail to provide a primary consumable electrode with a diameter of 820mm for use in a first VAR.

First VAR: A crystallizer with a diameter of 920mm was adopted, the first VAR was controlled by the melting rate, and a steady-state melting rate was controlled to be 3.5kg/min; helium cooling was initiated when 800kg of the primary consumable electrode was melted; a current was reduced and the melting rate was adjusted to 3.0kg/min when the weight of the remained primary consumable electrode was 1500kg; and hot topping controlled by the current was initiated when the weight of the remained primary consumable electrode was 200kg. The steel ingot was polished and flattened at the head and the tail to provide a first VAR ingot with a diameter of 900mm for use in a second VAR.

Second VAR: A crystallizer with a diameter of 1050mm was adopted, the second VAR was controlled by the melting rate, and a steady-state melting rate was controlled to be 4.0kg/min; helium cooling was initiated when 1000kg of the first VAR ingot was melted; the current was reduced and the melting rate was adjusted to 3.0kg/min when the weight of the remained first VAR ingot was 2000kg; and hot topping controlled by the current was carried out when the weight of the remained first VAR ingot was 250kg. After the second VAR, the steel ingot was vacuum-cooled for 3h and transferred within 2h to the annealing furnace for stress-relief annealing, which prevents the steel ingot from cracking after demoulding. The annealing furnace was pre-heated to 300°C and held at the temperature for 4h, heated to 800°C at a rate of 5°C/h and held at the temperature for 5h, cooled to 550°C at the a of 5°C/h and held at the temperature for 5h, and then air-cooled.

Test result: The trial-prepared Alloy 706 VAR ingot with the diameter of 1050mm and the weight of 15.5 tons is free from hot cracking or metallurgical defects such as black and white freckles. The composition of the head and tail of the steel ingot is tested, and the result shows that there is no apparent burning loss of Al and Ti at the head and the tail, with 0.27% Al element at the head, 0.24% Al at the tail, 1.68% Ti at the head and 1.78% Ti at the tail. The second VAR ingot with the diameter of 1050mm is diffusion annealed by homogenizing at high temperature, then polished and forged to prepare a bar. Upon non-destructive examination, it shows that there is no abnormal signal at the site where the electrode is exchanged, indicating that the second VAR can effectively address metallurgical quality defects suffered at the site of the Alloy 706 where the electrode is exchanged

### Example Two

This example is used to illustrate a method for preparing Alloy 706 (a VAR ingot with a diameter of 1050mm).

The target Alloy 706 had a composition of (by mass percentage):
C 0.011%, Cr 16.2%, Ni 42.5%, Nb 2.80%, Ti 1.57%, Al 0.15%, Si 0.02%, Mn 0.02%, P 0.008%, S 0.0004%, Co 0.01%, Mo 0.02%, B 0.003%, Cu 0.05%, Ca 0.001%, N 0.0045%, O 0.0025%, and the balance Fe.

The specific method for preparing the alloy was as follow.

Vacuum induction melting (VIM): According to the requirements of composition of the designed alloy, recycled material accounting for 50% of the elements needed for alloy of unit weight was weighed, and fresh metal accounting for the rest of the weight was weighed. A 12-ton VIM furnace was adopted, with an upper melting temperature limit being 1550°C. After melting down, the composition of molten steel was detected, and the molten steel was controlled to contain approximately 2.90wt% Nb, approximately 1.62wt% Ti, and approximately 0.20wt% Al by adding fresh metals. Refining was carried out under electromagnetic stirring at 1480°C for 40min, and tapping was conducted at a temperature of 1500°C. The molten steel was poured in two steps, followed by furnace cooling for 4h and demoulding to obtain two VIM ingots with a diameter of 820mm and a weight of 12 tons, which were directly annealed. An annealing furnace was pre-heated to 650°C, heated to 900°C at a rate of 25°C/h and held at the temperature for 24h, cooled to 700°C at a rate of 15°C/h and held at the temperature for 10h, and then air-cooled.

The annealed VIM ingots were polished and flattened at the head and the tails to prepare electroslag electrodes.

Electroslag remelting (ESR): A crystallizer with a diameter of 1100mm was adopted and a quaternary (CaF₂-CaO-Al₂O₃-TiO₂) slag system specifically having a compsotion of, by weight, 64% CaF₂, 15% CaO, 15% Al₂O₃, and 6% TiO₂ was adopted. A steady-state melting rate was 10kg/min. During smelting, Ar at 0.2 bar pressure was introduced for protection, which prevents the molten steel from contacting with oxygen and nitrogen in the air. Before exchanging the electrode, when the weight of the remained first electrode was 500kg, the melting rate was increased by 0.55kg/min to 15kg/min on the basis of the steady-state melting rate by adjusting input power and a voltage and was held until the electrode exchanging began. Smelting parameters during exchanging the electrode remained the same as those before exchanging the electrode, and the time for exchanging did not exceed 2min. After exchanging the electrode, when 200kg of a second electrode was melted, the melting rate was decreased by a slope of 0.75kg/min to 10kg/min by adjusting the input power and the voltage, and hot topping was carried out when the weight of the remained second electrode was 500kg.

After ESR, an ESR ingot was water cooled in a water-cooled crystallizer in the furnace for 4h, and within 0.5h after demoulding, transferred to an annealing furnace for stress-relief annealing. The annealing furnace was pre-heated to 450°C and held at the temperature for 24h, heated to 650°C at a rate of 15°C/h and held at the temperature for 4h, heated to 950°C at a rate of 25°C/h and held at the temperature for 12h, cooled to 600°C at a rate of 15°C/h and held at the temperature for 12h, and then air-cooled.

Diffusion annealing ESR ingot at high temperature: The ESR ingot was loaded into the furnace at the temperature of 550°C or below and held at the temperature for 4h, heated to 950°C at a rate of 10°C/h, heated to 1100°C at the rate of 15°C/h and held at the temperature for 12h, heated to 1190°C at a rate of 20°C/h and held at the temperature for 48h, cooled down to 850°C at the rate of 15°C/h and held at the temperature for 24h, and then air cooled.

Forging the electrode: The ESR ingot with the diameter of 1100mm was heated to 1150°C for 10h before forging. A free forging was performed on a 3500-ton high-speed forging press by stretching in one direction, in which reduction per pass in one direction was controlled to be 25mm, and the final forging temperature was 900°C. Finally, the ESR ingot was polished and flattened at the head and the tail to provide a primary consumable electrode with a diameter of 820mm for use in a first VAR.

First VAR: A crystallizer with a diameter of 920mm was adopted, the first VAR was controlled by the melting rate, and a steady-state melting rate was controlled to be 5.5kg/min; helium cooling was initiated when 1000kg of the primary consumable electrode is melted; a current was reduced and the melting rate was adjusted to 4.0kg/min when the weight of the remained primary consumable electrode is 2000kg; and hot topping controlled by the current was carried out when the weight of the remained primary consumable electrode is 500kg. The steel ingot was polished and flattened at the head and the tail to provide a first VAR ingot with a diameter of 900mm for use in a second VAR.

Second VAR: A crystallizer with a diameter of 1050mm was adopted, the second VAR was controlled by the melting rate, and a steady-state melting rate was controlled to be 6.5kg/min; helium cooling was initiated when 1500kg of the first VAR ingot is melted;, the current was reduced and the melting rate was adjusted to 6.0kg/min when the weight of the remained first VAR ingot is 2500kg; and hot topping controlled by the current was carried out when the weight of the remained first VAR ingot is 800kg. After the second VAR, the steel ingot was vacuum-cooled for 3h and transferred to the annealing furnace for stress-relief annealing within 2h after demoulding, which prevents the cracking of the steel ingot after demoulding. The annealing furnace was pre-heated to 450°C and held at the temperature for 8h for achieving homogeneous temperature distribution, heated to 850°C at a rate of 10°C/h and held at the temperature for 24h, cooled to 600°C at a rate of 15°C/h and held at the temperature for 12h, and then air-cooled.

During the second VAR, when the smelting proceeded to the site where the electrode is exchanged, fluctuation of the following key melting parameters occured: fluctuation of current exceeded ±1000A, fluctuation of voltage exceeded ±2V, and fluctuation of melting rate exceeded ±0.6kg/min. This indicated that, the second VAR during smelting was still unstable, and the metallurgical defects at the site where the electrode is exchanged were transferred to the second VAR ingot, therefore a third VAR was required.

Diffusion annealing second VAR ingot at high temperature: The second VAR ingot was loaded into the furnace at the temperature of 550°C or below and held at the temperature for 4h, heated to 950°C at a rate of 10°C/h, heated to 1100°C at a rate of 15°C/h and held at the temperature for 12h, heated to 1190°C at a rate of 20°C/h and held at the temperature for 48h, cooled down to 850°C at the a of 15°C/h and held at the temperature for 24h, and then air cooled.

Forging the electrode: The second VAR ingot with the diameter of 1050mm was heated to 1150°C for 10h before forging. A free forging was performed on the 3500-ton high-speed forging press by stretching in one direction, in which reduction per pass in one direction was controlled to be 25mm, and the final forging temperature was 900°C. Finally, the steel ingot was polished and flattened at the head and the tail to provide a tertiary consumable electrode with a diameter of 820mm for use in a third VAR.

Third VAR: A crystallizer with a diameter of 1050mm was adopted, the third VAR was controlled by the melting rate, and a steady-state melting rate was controlled to be 6.5kg/min; helium cooling was initiated when 1500kg of the VAR ingot is melted; the current was reduced and the melting rate was adjusted to 6.0kg/min when the weight of the remained VAR ingot was 2500kg; and hot topping controlled by the current was carried out when the weight of the remained VAR ingot was 800kg. After the third VAR, the steel ingot was vacuum-cooled for 3h and transferred to the annealing furnace for stress-relief annealing within 2h, which prevents the steel ingot from cracking after demoulding. The annealing furnace was pre-heated to 450°C and held at the temperature for 8h for achieving homogeneous temperature distribution, heated to 850°C at a rate of 10°C/h and held at the temperature for 24h, cooled to 600°C at a rate of 15°C/h and held at the temperature for 12h, and then air-cooled.

Test result: The trial-prepared Alloy 706 VAR ingot with the diameter of 1050mm and the weight of 16.2 tons is free from hot cracking or metallurgical defects such as black and white freckles. The composition at the head and tail of the steel ingot is tested, and the result shows that the there is no apparent burning loss of Al and Ti at the head and the tail, with 0.17% Al element at the head, 0.12% Al at the tail, 1.65% Ti at the head and 1.47% Ti at the tail. The third VAR ingot with the diameter of 1050mm is diffusion annealed by homogenizing at high temperature, then polished and forged to prepare a bar. Upon non-destructive examination, it shows that there is no abnormal signal at the site where the electrode is exchanged, indicating that the third VAR can effectively address the metallurgical quality defects suffered at the site of the Alloy 706 where the electrode is exchanged.

### Example Three

This example is used to illustrate a method for preparing Alloy 718 (a consumable ingot with a diameter of 1050mm).

The target Alloy 718 had a composition of (by weight):
C 0.015%, Cr 18.5%, Ni 53.5%, Nb 5.05%, Ti 0.92%, Al 0.55%, Si 0.04%, Mn 0.05%, P 0.006%, S 0.0008%, Co 0.02%, Mo 2.95%, B 0.004%, Cu 0.05%, Ca 0.001%, N 0.0048%, O 0.0024%, and the balance Fe.

The specific method for preparing the alloy was as follow.

Vacuum induction melting (VIM): According to the requirements of composition of the designed alloy, recycled material accounting for 40% of the elements needed for alloy of unit weight was weighed, and fresh metals accounting for the rest of the weight were weighed.. A 12-ton VIM furnace was adopted, with an upper melting temperature limit being 1550°C. After melting down, the composition of molten steel was detected, and the molten steel was controlled to contain approximately 5.08wt% Nb, approximately 0.97wt% Ti, and approximately 0.60wt% Al by adding fresh metals. Refining was carried out under electromagnetic stirring at 1480°C for 40min, and tapping was conducted at a temperature of 1500°C. The molten steel was poured in two steps, followed by furnace cooling for 6h and demoulding to obtain two VIM ingots with a diameter of 820mm and a weight of 12 tons which were directly annealed. An annealing furnace was pre-heated to 800°C, heated to 1000°C at a rate of 45°C/h and held at the temperature for 32h, cooled to 780°C at a rate of 35°C/h and held at the temperature for 32h, and then air-cooled.

The annealed VIM ingots were polished and flattened at the head and the tail to prepare electroslag electrodes.

Electroslag remelting (ESR): A crystallizer with a diameter of 1100mm was adopted and a quaternary (CaF₂-CaO-Al₂O₃-TiO₂) slag system having a composition of, by weight, 75% CaF₂, 25% CaO, 10% Al₂O₃, and 1% TiO₂ was adopted. A steady-state melting rate was 55kg/min. During smelting, Ar at 0.2 bar pressure was introduced for protection, which prevents the molten steel from contacting with oxygen and nitrogen in the air. Before exchanging the electrode, when the weight of a remained first electrode was 1000kg, the melting rate was increased by 2kg/min to 12kg/min on the basis of the steady-state melting rate by adjusting input power and a voltage and was held until the electrode exchanging began. Smelting parameters during exchanging the electrode remained the same as those before exchanging the electrode, and the time for exchanging did not exceed 2min. After exchanging the electrode, when 500kg of a second electrode was melted, the melting rate was decreased by a slope of 2kg/min to 15kg/min by adjusting the input power and the voltage, and hot topping was carried out when the weight of the remained second electrode was 600kg.

After ESR, an ESR ingot was water cooled in a water-cooled crystallizer in the furnace for 4h, and within 1h after demoulding, transferred to an annealing furnace for stress-relief annealing. The annealing furnace was pre-heated to 550°C and held at the temperature for 32h, heated to 750°C at a rate of 25°C/h and held at the temperature for 4h, heated to 1000°C at a rate of 30°C/h and held at the temperature for 32h, cooled to 750°C at the rate of 35°C/h and held at the temperature for 32h, and then air-cooled.

Diffusion annealing ESR ingot at high temperature: The ESR ingot was loaded into the furnace at the temperature of 550°C or below and held at the temperature for 4h, heated to 1000°C at a rate of 5°C/h, heated to 1150°C at the rate of 25°C/h and held at the temperature for 32h, heated to 1250°C at a rate of 25°C/h and held at the temperature for 72h, cooled down to 950°C at a rate of 35°C/h and held at the temperature for 32h, and then air cooled.

Forging the electrode: The ESR ingot with the diameter of 1100mm was heated to 1150°C for 12h before forging,. A free forging was performed on a 3500-ton high-speed forging press by stretching in one direction, in which reduction per pass in one direction was controlled to be 25mm, and the finishing forging temperature was 1000°C. Finally, the ESR ingot was polished and flattened at the head and the tail to provide a primary consumable electrode with a diameter of 820mm for use in a first VAR.

First VAR: A crystallizer with a diameter of 920mm was adopted, the first VAR was controlled by the melting rate, and a steady-state melting rate was controlled to be 7.5kg/min; helium cooling was initiated when 2000kg of the primary consumable electrode is melted; a current was reduced and the melting rate was adjusted to 7.0kg/min when the weight of the remained primary consumable electrode is 1000kg; and the hot topping which is controlled by the current was carried out when the weight of the remained primary consumable electrode is 1000kg. The steel ingot was polished and flattened at the head and at the tail to provide a first VAR ingot with a diameter of 900mm for use in a second VAR.

Second VAR: A crystallizer with a diameter of 1050mm was adopted, the second VAR was controlled by the melting rate, and a steady-state melting rate was controlled to be 8.5kg/min; helium cooling was initiated when 3000kg of the first VAR ingot is melted; the current was reduced and the melting rate was adjusted to 7.5kg/min when the weight of the remained first VAR ingot is 5500kg; and hot topping controlled by the current was carried out when the weight of the remained first VAR ingot is 1500kg. After the second VAR, the steel ingot was vacuum-cooled for 3h and transferred to the annealing furnace for stress-relief annealing within 2h, which prevents the steel ingot from cracking after demoulding. The annealing furnace was pre-heated to 750°C and held at the temperature for 32h for achieving homogeneous temperature distribution, heated to 1000°C at a rate of 50°C/h and held at the temperature for 32h, cooled to 750°C at the rate of 35°C/h and held at the temperature for 32h, and then air-cooled.

Test result: The trial-prepared Alloy 718 VAR ingot with the diameter of 1050mm and the weight of 15 tons is free from hot cracking or metallurgical defects such as black and white freckles. The composition of the steel ingot at the head and the tail is tested, and the result shows that there is no apparent burning loss of Al and Ti at the head and the tail, with 0.60% Al element at the head, 0.48% Al at the tail, 0.87% Ti at the head and 0.98% Ti at the tail. The second VAR ingot with the diameter of 1050mm is diffusion annealed by homogenizing at high temperature, then polished and forged to prepare a bar. Upon non-destructive examination, it shows that there is no abnormal signal at the site where the electrode is exchanged, indicating that the second VAR can effectively address the metallurgical quality defects suffered at the site of the Alloy 718 where the electrode is exchanged.

### Comparative Example One

Comparative example one is used to illustrate a method for preparing Alloy 706 (a consumable ingot with a diameter of 920mm) by adopting a triple-melt process.

The composition of the target Alloy 706 is the same as that of Alloy 706 in Example one (by mass percentage):
C 0.018%, Cr 15.8%, Ni 41.5%, Nb 3.01%, Ti 1.72%, Al 0.25%, Si 0.02%, Mn 0.01%, P 0.006%, S 0.0006%, Co 0.02%, Mo 0.01%, B 0.004%, Cu 0.02%, Ca 0.004%, N 0.005%, O 0.002%, and the balance Fe.

The specific method for preparing the alloy was as follow.

Vacuum induction melting (VIM): According to the requirements of composition of the designed alloy, recycled material accounting for 40% of the elements needed for alloy of unit weight was weighed, and fresh metals accounting for the rest of the weight were weighed. A 12-ton VIM furnace was adopted to obtain two VIM ingots with a diameter of 820mm having a weight of 12 tons, in which an upper melting temperature limit was 1550°C. After melting down, the composition of molten steel was detected, and the molten steel was controlled to contain approximately 3.10wt% Nb, approximately 1.82wt% Ti, and approximately 0.35wt% Al by adding fresh metals. Refining was carried out under electromagnetic stirring at 1480°C for 40min, and tapping was conducted at a temperature of 1500°C. After pouring, furnace cooling was carried out for 4h and demoulding was carried out to obtain VIM ingots which were directly annealed. The annealing furnace was pre-heated to 650°C, heated to 900°C at a rate of 25°C/h and held at the temperature for 24h, cooled to 600°C at a rate of 15°C/h and held at the temperature for 10h, and then air-cooled.

The annealed VIM ingots were polished and flattened at the head and the tail to prepare electroslag electrodes.

Electroslag remelting (ESR): A crystallizer with a diameter of 1100mm was adopted and a quaternary (CaF₂-CaO-Al₂O₃-TiO₂) slag system having a composition of 70% CaF₂, 15% CaO, 15% Al₂O₃, and 10% TiO₂ was adopted. A steady-state melting rate was 10kg/min. During smelting, Ar at 0.2 bar pressure was introduced for protection, which prevents the molten steel from contacting with oxygen and nitrogen in the air. Before exchanging the electrode, when the weight of a remained first electrode was 600kg, the melting rate was increased by 0.55kg/min to 15kg/min on the basis of the steady-state melting rate by adjusting input power and a voltage and was held until the electrode exchanging began. Smelting parameters during exchanging the electrode were the same as those before exchanging the electrode, and the time for exchanging did not exceed 2min. After exchanging the electrode, when 200kg of a second electrode was melted, the melting rate was decreased by 0.75kg/min to 10kg/min by adjusting the input power and the voltage, and hot topping was carried out when the weight of the remained second electrode was 500kg.

After ESR, an ESR ingot was water cooled in a water-cooled crystallizer in the furnace for 4h, and within 0.5h after demoulding, transferred to an annealing furnace for stress-relief annealing. The annealing furnace was pre-heated to 450°C and held at the temperature for 24h, heated to 650°C at a rate of 15°C/h and held at the temperature for 4h, heated to 950°C at a rate of 25°C/h and held at the temperature for 12h, cooled to 600°C at a rate of 15°C/h and held at the temperature for 12h, and then air-cooled.

Diffusion annealing ESR ingot at high temperature: The ESR ingot was loaded into the furnace at the temperature of 550°C or below and held at the temperature for 4h, heated to 950°C at a rate of 10°C/h, heated to 1100°C at the rate of 15°C/h and held at the temperature for 12h, heated to 1190°C at a rate of 20°C/h and held at the temperature for 48h, cooled down to 850°C at the rate of 15°C/h and held at the temperature for 24h, and then air cooled.

Forging the electrode: The ESR ingot with the diameter of 1100mm was heated to 1150°C for 10h Before forging. A free forging was performed on a 3500-ton high-speed forging press was adopted for stretching in one direction, in which reduction per pass in one direction was controlled to be 25mm, and a finishing forging temperature was 900°C. Finally, the ESR ingot was polished and flattened at the head and the tail to prepare a consumable electrode with a diameter of 820mm.

VAR: A crystallizer with a diameter of 920mm was adopted, the VAR was controlled by the melting rate, and a steady-state melting rate was controlled to be 5.5kg/min; helium cooling was initiated when 1000kg of the consumable electrode is melted; a current was reduced and the melting rate was adjusted to 4.0kg/min when the weight of the remained consumable electrode is 2000kg; and the hot topping controlled by the current was carried out when the weight of the remained consumable electrode is 500kg. After the VAR, the steel ingot was vacuum-cooled for 3h and transferred to the annealing furnace for stress-relief annealing within 2h after demoulding, which prevents the steel ingot from cracking after demoulding. The annealing furnace was pre-heated to 450°C and held at the temperature for 8h for keeping homogeneous, heated to 850°C at a rate of 10°C/h and held at the temperature for 24h, cooled to 600°C at a rate of 15°C/h and held at the temperature for 12h, and then air-cooled.

Test result: The Alloy 706 VAR ingot with the diameter of 920mm and the weight of 15 tons prepared by the triple-melt process is free from hot cracking. The composition the steel ingot at the head and the tail is tested, and the result shows that there is apparent burning loss of Al and Ti at the head and the tail, with 0.29% Al element at the head, 0.19% Al at the tail, 1.62% Ti at the head and 1.80% Ti at the tail. The second VAR ingot with the diameter of 1050mm is diffusion annealed by homogenizing at high temperature, then polished and forged to prepare a bar. Upon non-destructive examination, it shows that there is abnormal signal at the site where the electrode is exchanged, and obvious black freckles are found at the site where the electrode is exchanged by dissection.

### Comparative Example Two: Consumable ingot of Alloy 706 having a diameter of 1050mm

Comparative example two is used to illustrate a method for preparing Alloy 706 by adopting a triple-melt process (a VAR ingot with a diameter of 1050mm).

The composition of the desired Alloy 706 is the same as that of Alloy 706 in example two (by mass percentage):
C 0.011%, Cr 16.2%, Ni 42.5%, Nb 2.80%, Ti 1.57%, Al 0.15%, Si 0.02%, Mn 0.02%, P 0.008%, S 0.0004%, Co 0.01%, Mo 0.02%, B 0.003%, Cu 0.05%, Ca 0.001%, N 0.0045%, O 0.0025%, and the balance Fe.

The specific method for preparing the alloy was as follow.

Vacuum induction melting (VIM): According to the requirements of composition of the designed alloy, recycled material, accounting for 50% of the elements needed for alloy of unit weight, was weighed, and fresh metals, accounting for the rest of the weight, were weighed. A 12-ton VIM furnace was adopted to obtain two VIM ingots with a diameter of 820mm having a weight of 12 tons, in which an upper melting temperature limit was 1550°C. After melting down, the composition of molten steel was detected, and by adding fresh metals, the molten steel was controlled to contain approximately 3.10wt% Nb, approximately 1.72wt% Ti, and approximately 0.30wt% Al. Refining was carried out under electromagnetic stirring at 1480°C for 40min, and tapping was conducted at a temperature of 1500°C. After pouring, furnace cooling was carried out for 4h and demoulding was carried out to obtain VIM ingots which are directly annealed. An annealing furnace was pre-heated to 650°C, heated to 900°C at a rate of 25°C/h and held at the temperature for 24h, cooled to 600°C at a rate of 15°C/h and held at the temperature for 10h, and then air-cooled.

The annealed VIM ingots were polished and flattened at the heads and the tails to prepare electroslag electrodes.

Electroslag remelting (ESR): A crystallizer with a diameter of 1100mm was adopted and a quaternary slag system specifically having a composition of, by weight, 64% CaF₂, 15% CaO, 15% Al₂O₃, and 6% TiO₂ was adopted. A steady-state melting rate was 10kg/min. During smelting, Ar at 0.2 bar pressure was introduced for protection, which prevents the molten steel from contacting with oxygen and nitrogen in the air. Before exchanging the electrode, when the weight of a remained first electrode was 600kg, the melting rate was increased by 0.55kg/min to 15kg/min on the basis of the steady-state melting rate by adjusting input power and a voltage and was held until the electrode exchanging began. Smelting parameters during exchanging the electrode were the same as those before exchanging the electrode, and the time for exchanging did not exceed 2min. After exchanging the electrode, when a second electrode was melted 200kg, the melting rate was decreased by a slope of 0.75kg/min to 10kg/min by adjusting the input power and the voltage, and hot topping was carried out when the weight of the remained second electrode was 500kg.

After ESR, an ESR ingot was water cooled in a water-cooled crystallizer in the furnace for 4h, and within 0.5h after demoulding, transferred to an annealing furnace for stress-relief annealing. The annealing furnace was pre-heated to 450°C and held at the temperature for 24h, heated to 650°C at a rate of 15°C/h and held at the temperature for 4h, heated to 950°C at a rate of 25°C/h and held at the temperature for 12h, cooled to 600°C at a rate of 15°C/h and held at the temperature for 12h, and then air-cooled.

Diffusion annealing ESR ingot at high temperature: The ESR ingot was loaded into the furnace at the temperature of 550°C or below and held at the temperature for 4h, heated to 950°C at a rate of 10°C/h, heated to 1100°C at the rate of 15°C/h and held at the temperature for 12h, heated to 1190°C at a rate of 20°C/h and held at the temperature for 48h, cooled down to 850°C at the rate of 15°C/h and held at the temperature for 24h, and then air cooled.

Forging the electrode: The ESR ingot with the diameter of 1100mm was heated to 1150°C for 10h before forging. A free forging was performed on a 3500-ton high-speed forging press was adopted by stretching in one direction, in which reduction per pass in one direction was controlled to be 25mm, and a finishing forging temperature was 900°C. Finally, the ESR ingot was polished and flattened at the head and the tail to provide a consumable electrode with a diameter of 820mm.

VAR: A crystallizer with a diameter of 1050mm was adopted, the VAR was controlled by the melting rate, and a steady-state melting rate was controlled to be 6.0kg/min; helium cooling was initiated when 1500kg of the consumable electrode is melted; a current was reduced and the melting rate was adjusted to 5.0kg/min when the weight of the remained consumable electrode is 2500kg; and the hot topping which is controlled by the current was carried out when the weight of the remained consumable electrode is 800kg. After the VAR, the steel ingot was vacuum-cooled for 3h and transferred to the annealing furnace for stress-relief annealing within 2h, which prevents the steel ingot from cracking after demoulding. The annealing furnace was pre-heated to 450°C and held at the temperature for 8h for keeping homogeneous, heated to 850°C at a rate of 10°C/h and held at the temperature for 24h, cooled to 600°C at a rate of 15°C/h and held at the temperature for 12h, and then air cooled.

Test result: The Alloy 706 VAR ingot with the diameter of 1050mm having the weight of 15.8 tons prepared by the triple-melt process is free from hot cracking. The composition of the steel ingot at the head and tail is tested, and the result shows that there is no apparent buring loss of Al and Ti at the head and the tail, with 0.16% Al element at the head, 0.12% Al at the tail, 1.65% Ti at the head and 1.50% Ti at the tail. The second VAR ingot with the diameter of 1050mm is diffusion annealed by homogenizing at high temperature, then polished and forged to prepare a bar. Upon non-destructive examination, it shows that there is abnormal signal at the site where the electrode is exchanged, and obvious black freckles are found at the site where the electrode is exchanged by dissection.

What is provided above is merely some preferred embodiments of this application. The scope of this application is not limited by the above embodiments. Therefore, some improvements and modifications can be made by those skilled in the art.

## Claims

1. A smelting process of a Nb superalloy ingot, **characterized by** comprising the following steps:
vacuum induction melting (VIM): conducting VIM on pure metal raw material and/or recycled material as raw material, and pouring to form a plurality of consumable VIM ingots with the same composition;
electroslag remelting (ESR): preparing the same number of electroslag electrodes as that of the prepared VIM ingots; and electroslag remelting all the prepared electroslag electrodes under protection of argon, followed by cooling down and demoulding to obtain an ESR ingot; and conducting consumable vacuum arc remelting (VAR) for a plurality of times: performing a first annealing and a second annealing on the obtained ESR ingot and forging by stretching to a predetermined size to obtain a primary consumable electrode, in which the second annealing is performed at a temperature higher than that for performing the first annealing temperature; and performing VAR for at least twice by using the primary consumable electrode as starting material, in which a resulting VAR ingot obtained after each VAR is used as a consumable electrode to be used in a next VAR, with a diameter of the resulting VAR ingot being increased after each VAR until fluctuation of a melting rate during a last VAR fall within ±10% of a steady-state melting rate, and a VAR ingot obtained in the last VAR is used to prepare an ingot with a target diameter;
wherein in the step of VIM, the raw material contains 2.8-5.5wt% Nb, 0.2-1.0wt% Al and 0.5-2.0wt% Ti;
in the step of VIM, the raw material is melt at a temperature of 1300-1550°C until melting down, refined under electromagnetic stirring at 1350-1550°C for 15-120min, cooled for 1-10h, and demoulded to obtain the VIM ingot; and the VIM process is performed for a plurality of times to obtain a plurality of VIM ingots with the same composition;
a quaternary slag system (CaF₂-CaO-Al₂O₃-TiO₂) comprising 60-75wt% CaF₂, 10-25wt% CaO, 10-25wt% Al₂O₃, and 1-10wt% TiO₂ is adopted;
a steady-state melting rate of ESR is controlled to be 5-15kg/min,
before exchanging each electrode, when the remaining weight of one electrode is 500kg-1000kg, the melting rate is increased by a slope of 0.5-2kg/min to 12-25kg/min on the basis of the steady-state melting rate and kept stable until the electrode exchanging begins, during which the smelting parameters remain the same as those before the exchanging and the exchanging time does not exceed 2 min; after exchanging each electrode, the melting rate is reduced by a slope of 0.5-2kg/min to a steady-state melting rate of 5-15kg/min for continuing the remelting when 100kg-500kg of a next electrode is melted, and hot topping is carried out when the remaining weight of a last electrode is 200-600kg; and
after ESR, cooling down is carried out for 2-10h and demoulding is carried out to obtain the ESR ingot;
in the step of VAR for a plurality of times, performing the first annealing and the second annealing on the obtained ESR ingot and forging by stretching to a predetermined size to obtain the primary consumable electrode comprises the following steps of:
initiating the first annealing to the ESR ingot within 0.5-2h after demoulding, in which the temperature is initially raised to 300-550°C, kept constant for 12-32h for achieving homogeneous temperature distribution, raised to 600-750°C at a rate of 1-25°C/h, kept constant for 4-32h, raised to 800-1000°C at a rate of 5-35°C/h, kept constant for 4-32h, lowered to 550-750°C at a rate of 1-35°C/h, and kept constant for 4-32h, followed by air cooling;
performing the second annealing on the ESR ingot after the first annealing, in which the temperature is raised to 800-1000°C at a rate of 5-35°C/h, raised to 1050-1150°C at a rate of 1-25°C/h, kept constant for 4-32h, raised to 1150-1250°C at a rate of 1-25°C/h, kept constant for 24-72h, lowered to 800-950°C at a rate of 1-35°C/h, and kept constant for 4-32h, followed by air cooling;
forging the ESR ingots after the second annealing, in which the ESR ingot is heated to 1100-1180°C for 4-12h before forging, and subjected to a free forging on a high-speed forging press of 3000 tons or above by stretching in one direction, in which a reduction per pass in one direction is 5-30mm and a final forging temperature is in a range of 850-1000°C; and
polishing the ingots stretched during free forging and flattening at the head and the tail to obtain the primary consumable electrode;
in the step of VAR for a plurality of times, a first VAR and a second VAR comprising the following steps of: performing the first VAR at a steady-state melting rate of 3.5-7.5kg/min; initiating helium cooling when 800-2000kg of the primary consumable electrode is melted; decreasing a current and adjusting the melting rate to 3.0-7.0kg/min when the weight of the remained primary consumable electrode is 1500-5000kg; and starting hot topping when the weight of the remained primary consumable electrode is 200-1000kg, thereby obtaining a first VAR ingot;
for the second VAR, first polishing the first VAR ingot, and flattening the first VAR ingot at the head and the tail to obtain a secondary consumable electrode;
performing the second VAR at a steady-state melting rate of 4.0-8.5kg/min; initiating helium cooling when 1000-3000kg of the secondary consumable electrode is melted; decreasing the current and adjusting the melting rate to 3.0-7.5kg/min when the weight of the remained secondary consumable electrode is 2000-5500kg; and starting hot topping when the weight of the remained secondary consumable electrode is 250-1500kg; and
after the second VAR, vacuum cooling for 1-8h and then starting stress-relief annealing within 2h, wherein the temperature is raised to 300-750°C, kept constant for 4-32h for achieving homogeneous temperature distribution, raised to 800-1000°C at a rate of 5-50°C/h, kept constant for 4-32h, lowered to 550-750°C at a rate of 1-35°C/h, and kept constant for 4-32h, followed by air cooling;
wherein the Nb superalloy ingot is an Alloy 706 with a diameter of 800mm or above, by mass percentage, having a chemical composition of: C≤0.02%, Cr 15.5-16.5%, Ni 40.0-43.0%, Nb 2.8-3.2%, Ti 1.5-1.8%, Al 0.1-0.3%, Si≤0.10%, Mn≤0.20%, P≤0.015%, S ≤0.0013%, Co≤0.30%, Mo≤0.20%, B≤0.006%, Cu≤0.30%, Ca≤0.005%, N≤ 0.006%, O≤0.005%, and Fe the balance; or the Nb superalloy ingot is an Alloy 718 with a diameter of 80mm or above, by mass percentage, having a chemical composition of: C 0.005-0.04%, Cr 17.0-19.0%, Ni 52.0-55.0%, Nb 4.9-5.5%, Ti 0.75-1.15%, Al 0.35-0.65%, Si≤0.10%, Mn≤0.15%, P≤0.008%, S≤0.002%, Co≤0.50%, Mo 2.8-3.3%, B ≤0.006%, Cu≤0.10%, Ca≤0.005%, N≤0.01%, O≤0.003%, and Fe the balance.

2. The smelting process according to claim 1, **characterized in that**, preparing the electroslag electrode comprises directly stress-relieve annealing each VIM ingot, in which the temperature is initially raised to 600-800°C, then raised to 800-1000°C at a rate of 5-45°C/h, kept constant for 4-32h, lowered to 600-800°C at a rate of 1-35°C/h and kept constant for 4-32h; air cooling; polishing; and flattening at the head and the tail to obtain the electroslag electrode.

3. The smelting process according to any one of claims 1-2, **characterized in that**, if fluctuation of the melting rate during the second VAR is beyond ±10% of the steady-state melting rate, an obtained second VAR ingot is used to prepare a consumable electrode to be used for a next VAR by the same way as for preparing the primary consumable electrode, including the same first annealing, second annealing, and forging by stretching, and then the second VAR is repeated.

## Patentansprüche

1. Verfahren zum Schmelzen eines Nb-Superlegierungsingots, **dadurch gekennzeichnet, dass** es die folgenden Schritte umfasst:
Vakuum-Induktionsschmelzen (VIM): Durchführung von VIM mit reinem Metall-Rohmaterial und/oder recyceltem Material als Rohmaterial und Gießen, um eine Vielzahl von verbrauchbaren VIM-Blöcken mit derselben Zusammensetzung zu bilden;
Elektroschlacke-Umschmelzen (ESR): Herstellen der gleichen Anzahl von Elektroschlacke-Elektroden wie die vorbereiteten VIM-Blöcke; und Elektroschlacke-Umschmelzen aller hergestellten Elektroschlacke-Elektroden unter Schutz von Argon, gefolgt von Abkühlen und Entformen, um einen ESR-Ingot zu erhalten; und mehrmaliges Durchführen des Vakuum-Lichtbogen-Umschmelzens (VAR): Durchführen eines ersten Glühvorgangs und eines zweiten Glühvorgangs an dem erhaltenen ESR-Ingot und Schmieden durch Recken auf eine vorbestimmte Größe, um eine primäre verbrauchbare Elektrode zu erhalten, wobei der zweite Glühvorgang bei einer höheren Temperatur als die Temperatur bei der Durchführung des ersten Glühvorgangs durchgeführt wird; und mindestens zweimaliges Durchführen von VAR unter Verwendung der primären verbrauchbaren Elektrode als Ausgangsmaterial, wobei ein resultierender VAR-Ingot, der nach jedem VAR erhalten wird, als verbrauchbare Elektrode verwendet wird, die in einem nächsten VAR verwendet wird, wobei der Durchmesser des resultierenden VAR-Ingots nach jedem VAR vergrößert wird, bis die Fluktuation der Schmelzgeschwindigkeit während eines letzten VAR innerhalb von ± 10 % einer stationären Schmelzgeschwindigkeit fällt, und ein VAR-Ingot, der in dem letzten VAR erhalten wurde, verwendet wird, um einen Ingot mit einem Zieldurchmesser herzustellen;
wobei das Rohmaterial 2,8 - 5,5 Gew.-% Nb, 0,2 - 1,0 Gew.-% Al und 0,5 - 2,0 Gew.-% Ti in dem VIM-Schritt enthält;
in dem VIM-Schritt wird das Rohmaterial bei einer Temperatur von 1.300 - 1.550 °C bis zum Einschmelzen geschmolzen, unter elektromagnetischem Rühren bei 1.350 - 1.550 °C für 15 - 120 min raffiniert, für 1 - 10 h abgekühlt und entformt, um den VIM-Ingot zu erhalten; und das VIM-Verfahren wird mehrmals durchgeführt, um eine Vielzahl von VIM-Ingots mit der gleichen Zusammensetzung zu erhalten;
ein quaternäres Schlackensystem (CaF2-CaO-Al2O3-TiO2) mit 60 - 75 Gew.-% CaF2, 10 - 25 Gew.-% CaO, 10 - 25 Gew.-% Al2O3 und 1 - 10 Gew.-% TiO2 wird verwendet;
eine stationäre Schmelzgeschwindigkeit des ESR wird auf 5 - 15 kg/min geregelt, vor dem Austausch jeder Elektrode, wenn das verbleibende Gewicht einer Elektrode 500 - 1000 kg beträgt, wird die Schmelzgeschwindigkeit um eine Steigung von 0,5 - 2 kg/min auf 12 - 25 kg/min auf der Basis der stationären Schmelzgeschwindigkeit erhöht und bis zum Beginn des Elektrodenaustauschs stabil gehalten, wobei die Schmelzparameter die gleichen bleiben wie vor dem Austausch und die Austauschzeit 2 min nicht überschreitet; nach dem Austausch jeder Elektrode wird die Schmelzgeschwindigkeit um eine Steigung von 0.5 - 2 kg/min auf eine stationäre Schmelzgeschwindigkeit von 5 - 15 kg/min reduziert, um das Umschmelzen fortzusetzen, wenn 100 - 500 kg einer nächsten Elektrode geschmolzen sind, und "Hot Topping" wird durchgeführt wird, wenn das Restgewicht einer letzten Elektrode 200 - 600 kg beträgt; und
nach der ESR erfolgt eine Abkühlung von 2 - 10 Stunden und eine Entformung, um den ESR-Ingot zu erhalten;
in dem VAR-Schritt erfolgt mehrfaches Durchführen des ersten Glühvorgangs und des zweiten Glühvorgangs des erhaltenen ESR-Ingots und Schmieden durch Recken auf eine vorbestimmte Größe, um die primäre verbrauchbare Elektrode zu erhalten, mit den folgenden Schritten:
Einleiten des ersten Glühvorgangs des ESR-Ingots innerhalb von 0,5 - 2 h nach der Entformung, bei dem die Temperatur zunächst auf 300 - 550 °C erhöht wird, für 12 - 32 h konstant gehalten wird, um eine homogene Temperaturverteilung zu erreichen, auf 600 - 750 °C mit einer Geschwindigkeit von 1 - 25 °C/h erhöht wird, für 4 - 32 h konstant gehalten wird, auf 800 - 1.000 °C mit einer Geschwindigkeit von 5 - 35 °C/h erhöht wird, für 4 - 32 h konstant gehalten wird, auf 550 - 750 °C mit einer Geschwindigkeit von 1 - 35 °C/h gesenkt wird und für 4 - 32 h konstant gehalten wird, gefolgt von Luftkühlen;
Schmieden der ESR-Ingots nach dem zweiten Glühvorgang, wobei der ESR-Ingot vor dem Schmieden 4 - 12 Stunden lang auf 1.100 - 1.180 °C erwärmt wird und einem Freiformschmieden auf einer Hochgeschwindigkeitsschmiedepresse von 3.000 Tonnen oder mehr durch Strecken in einer Richtung unterzogen wird, wobei die Verringerung pro Durchgang in einer Richtung 5 - 30 mm beträgt und die Endschmiedetemperatur in einem Bereich von 850 - 1.000 °C liegt; und
Polieren der beim Freiformschmieden gestreckten Ingots und Abflachen des Kopfes und des Endes, um die primäre Abbrandelektrode zu erhalten;
in dem Schritt des VAR wird mehrfach ein erster VAR und ein zweiter VAR durchgeführt, der die folgenden Schritte umfasst: Durchführen des ersten VAR bei einer stationären Schmelzgeschwindigkeit von 3,5 - 7,5 kg/min; Einleiten der Heliumkühlung, wenn 800 - 2.000 kg der primären verbrauchbaren Elektrode geschmolzen sind; Verringern des Stroms und Einstellen der Schmelzgeschwindigkeit auf 3,0 - 7,0 kg/min, wenn das Gewicht der verbliebenen primären verbrauchbaren Elektrode 1.500 - 5.000 kg beträgt; und Starten des Hot Topping, wenn das Gewicht der verbliebenen primären verbrauchbaren Elektrode 200 - 1.000 kg beträgt, wodurch ein erster VAR-Ingot erhalten wird;
für das zweite VAR, erstes Polieren des ersten VAR-Ingots und Abflachen des ersten VAR-Ingots am Kopf und am Ende, um eine sekundäre verbrauchbare Elektrode zu erhalten;
Durchführen des zweiten VAR bei einer stationären Schmelzgeschwindigkeit von 4,0 - 8,5 kg/min; Einleiten der Heliumkühlung, wenn 1.000 - 3.000 kg der sekundären verbrauchbaren Elektrode geschmolzen sind; Verringern des Stroms und Einstellen der Schmelzgeschwindigkeit auf 3,0 - 7,5 kg/min, wenn das Gewicht der verbliebenen sekundären verbrauchbaren Elektrode 2.000 - 5.500 kg beträgt; und Starten des Hot Topping, wenn das Gewicht der verbliebenen sekundären verbrauchbaren Elektrode 250 - 1.500 kg beträgt; und
nach dem zweiten VAR, Vakuumkühlung für 1 - 8 h und dann Beginn des Spannungsfreiglühens innerhalb von 2 h, wobei die Temperatur auf 300 - 750 °C erhöht wird und für 4 - 32 h konstant gehalten wird, um eine homogene Temperaturverteilung zu erreichen, wobei die Temperatur auf 800 - 1.000 °C mit einer Geschwindigkeit von 5 - 50 °C/h erhöht wird, für 4 - 32 h konstant gehalten wird, auf 550 - 750 °C mit einer Geschwindigkeit von 1 - 35 °C/h gesenkt wird und für 4 - 32 h konstant gehalten wird, gefolgt von Luftkühlen;
wobei der Nb-Superlegierungsingot eine Legierung 706 mit einem Durchmesser von 800 mm oder mehr ist, mit einer chemischen Zusammensetzung von: C≤0,02 %, Cr 15,5-16,5 %, Ni 40,0-43,0 %, Nb 2,8-3,2 %, Ti 1,5-1,8 %, Al 0,1-0,3 %, Si≤0,10 %, Mn≤0,20 %, P≤0,015 %, S≤0,0013 %, Co≤0,30 %, Mo≤0,20 %, B≤0,006 %, Cu≤0,30 %, Ca≤0. 005 %, N≤0,006 %, O≤0,005 %, und Fe als Rest; oder wobei der Nb-Superlegierungsingot eine Legierung 718 mit einem Durchmesser von 80 mm oder mehr ist und in Massenprozent diese chemische Zusammensetzung besitzt: C 0,005-0,04 %, Cr 17,0-19,0 %, Ni 52,0-55,0 %, Nb 4,9-5,5 %, Ti 0,75-1,15 %, Al 0,35-0,65 %, Si≤0,10 %, Mn≤0,15 %, P≤0. 008 %, S≤0,002 %, Co≤0,50 %, Mo 2,8-3,3 %, B≤0,006 %, Cu≤0,10 %, Ca≤0,005 %, N≤0,01 %, O≤0,003 % und Fe als Rest.

2. Verfahren zum Schmelzen nach Anspruch 1, **dadurch gekennzeichnet, dass** die Herstellung der Elektroschlackenelektrode ein direktes Spannungsfreiglühen jedes VIM-Ingots umfasst, bei dem die Temperatur zunächst auf 600 - 800 °C erhöht, dann mit einer Geschwindigkeit von 5 - 45 °C/h auf 800 - 1.000 °C erhöht und für 4 - 32 h konstant gehalten wird, dann mit einer Geschwindigkeit von 1 - 35 °C/h auf 600 - 800 °C gesenkt und für 4 - 32 h konstant gehalten wird; Luftkühlen; Polieren; und Abflachen des Kopfes und des Endes, um die Elektroschlackenelektrode zu erhalten.

3. Verfahren zum Schmelzen nach Anspruch 1 oder 2, **dadurch gekennzeichnet, dass**, wenn die Schwankung der Schmelzgeschwindigkeit während des zweiten VAR ±10 % der stationären Schmelzgeschwindigkeit übertrifft, ein erhaltener zweiter VAR-Ingot verwendet wird, um eine verbrauchbare Elektrode herzustellen, die für einen nächsten VAR auf die gleiche Weise wie für die Herstellung der primären verbrauchbaren Elektrode verwendet wird, einschließlich des gleichen ersten Glühvorgangs, des zweiten Glühvorgangs und Schmiedens durch Recken, und dass dann das zweite VAR wiederholt wird.

## Revendications

1. Procédé de fusion d'un lingot en superalliage de Nb, **caractérisé en ce qu'**il comprend les étapes suivantes :
fusion par induction sous vide (VIM) : réalisation d'une fusion par induction sous vide sur des matières premières métalliques pures et/ou des matières recyclées en tant que matières premières, et coulée pour former une pluralité de lingots VIM consommables ayant la même composition ;
refusion sous laitier électroconducteur (ESR) : préparation du même nombre d'électrodes sous laitier électroconducteur que celui des lingots VIM préparés ; et refusion sous laitier électroconducteur de toutes les électrodes sous laitier électroconducteur préparées sous protection d'argon, suivie d'un refroidissement et d'un démoulage pour obtenir un lingot ESR ; et réalisation d'une refusion à l'arc sous vide (VAR) consommable plusieurs fois : exécution d'un premier recuit et d'un second recuit sur le lingot ESR obtenu et forgeage par étirage jusqu'à une taille prédéterminée pour obtenir une électrode consommable primaire, le second recuit étant effectué à une température supérieure à celle du premier recuit ; et réalisation d'une VAR au moins deux fois en utilisant l'électrode consommable primaire comme matière de départ, le lingot VAR résultant obtenu après chaque VAR étant utilisé comme électrode consommable à utiliser dans une VAR suivante, un diamètre du lingot VAR résultant étant augmenté après chaque VAR jusqu'à ce que la fluctuation d'une vitesse de fusion pendant la dernière VAR se situe à ±10 % d'une vitesse de fusion permanente, et un lingot VAR obtenu dans la dernière VAR est utilisé pour préparer un lingot ayant un diamètre cible ;
**en ce que**, à l'étape de la VIM, la matière première contient 2,8 à 5,5 % en poids de Nb, 0,2 à 1,0 % en poids d'AI et 0,5 à 2,0 % en poids de Ti ;
à l'étape de la VIM, la matière première est fondue à une température comprise entre 1300 et 1550 °C jusqu'à ce qu'elle soit fondue, affinée sous agitation électromagnétique à une température comprise entre 1350 et 1550 °C pendant 15 à 120 minutes, refroidie pendant 1 à 10 h et démoulée pour obtenir le lingot VIM ; et le procédé VIM est réalisé plusieurs fois pour obtenir une pluralité de lingots VIM ayant la même composition ;
un système de laitier quaternaire (CaF₂-CaO-Al₂O₃-TiO₂) comprenant 60 à 75 % en poids de CaF₂, 10 à 25 % en poids de CaO, 10 à 25 % en poids de Al₂O₃, et 1 à 10 % en poids de TiO₂ est adopté ;
un vitesse de fusion permanente de ESR est contrôlée pour être de 5 à 15 kg/min,
avant d'échanger chaque électrode, lorsque le poids résiduel d'une électrode est compris entre 500 et 1000 kg, la vitesse de fusion est augmentée selon une pente de 0,5 à 2 kg/min jusqu'à 12 à 25 kg/min sur la base de la vitesse de fusion permanente et est maintenue stable jusqu'au début de l'échange d'électrode pendant lequel les paramètres de fusion restent les mêmes que ceux avant l'échange et la durée d'échange n'excède pas 2 minutes ; après échange de chaque électrode, la vitesse de fusion est réduite selon une pente de 0,5 à 2 kg/min jusqu'à une vitesse de fusion permanente de 5 à 15 kg/min pour la poursuite de la refusion lorsque 100 kg à 500 kg d'une électrode suivante sont fondus, et la masselotte est effectuée lorsque le poids restant d'une dernière électrode est de 200 à 600 kg ; et
après l'ESR, le refroidissement est effectué pendant 2 à 10 h et le démoulage est effectué pour obtenir le lingot ESR ;
à l'étape de la VAR pendant plusieurs fois, réalisation du premier recuit et du second recuit sur le lingot ESR obtenu et forgeage par étirage jusqu'à une taille prédéterminée pour obtenir l'électrode consommable primaire comprend les étapes suivantes consistant à :
initier le premier recuit sur le lingot ESR dans les 0,5 à 2 h après démoulage, dans lequel la température est initialement augmentée à une valeur comprise entre 300 et 500 °C, maintenue constante pendant 12 à 32 h pour obtenir une répartition homogène de la température, augmentée à une valeur comprise entre 600 et 750 °C à une vitesse comprise entre 1 et 25 °C/h, maintenue constante pendant 4 à 32 h, augmentée à une valeur comprise entre 800 et 1000 °C à une vitesse comprise entre 5 et 35 °C/h, maintenue constante pendant 4 à 32 h, abaissée à une valeur comprise entre 550 et 750 °C à une vitesse comprise entre 1 et 35 °C/h, et maintenue constante pendant 4 à 32 h, suivi d'un refroidissement à air ;
effectuer le second recuit sur le lingot ESR après le premier recuit, dans lequel la température est augmentée à une valeur comprise entre 800 et 1000 °C à une vitesse comprise entre 5 et 35 °C/h, augmentée à une valeur comprise entre 1050 et 1150 °c à une vitesse comprise entre 1 et 25 °C/h, maintenue constante pendant 4 à 32 h, augmentée à une valeur comprise entre 1150 et 1250 °C à une vitesse comprise entre 1 et 25 °C/h, maintenue constante pendant 24 à 72 h, abaissée à une valeur comprise entre 800 et 950 °C à une vitesse comprise entre 1 et 35 °C/h, et maintenue constante pendant 4 à 32 h, suivi d'un refroidissement à air ;
forger les lingots ESR après le second recuit, dans lequel le lingot ESR est chauffé à une température comprise entre 1100 et 1180 °C pendant 4 à 12 h avant forgeage, et soumis à un forgeage libre sur une presse à forger à grande vitesse de 3000 tonnes ou plus par étirage dans un sens, dans lequel une réduction par passe dans un sens est de 5 à 30 mm et une température finale de forgeage est comprise dans une plage de 850 à 1000 °C ; et
polir les lingots étirés pendant le forgeage libre et l'aplatissement au niveau de la tête et de la queue pour obtenir l'électrode consommable primaire ;
à l'étape de la VAR pendant plusieurs fois, une première VAR et une seconde VAR comprenant les étapes suivantes consistant à : effectuer la première VAR à une vitesse de fusion permanente de 3,5 à 7,5 kg/min ; initier le refroidissement à hélium lorsque 800 à 2000 kg de l'électrode consommable primaire sont fondus ; diminuer un courant et ajuster la vitesse de fusion à une valeur comprise entre 3,0 et 7,0 kg/min lorsque le poids de l'électrode consommable primaire restante est entre 1500 et 5000 kg ; et commencer la masselotte lorsque le poids de l'électrode consommable primaire restante est entre 200 et 1000 kg, ce qui permet d'obtenir un premier lingot VAR ;
pour la seconde VAR, polir d'abord le premier lingot VAR, puis aplatir le premier lingot VAR au niveau de la tête et de la queue pour obtenir une électrode consommable secondaire ;
effectuer la seconde VAR à une vitesse de fusion permanente d'une valeur comprise entre 4,0 et 8,5 kg/min ; initier le refroidissement à hélium lorsque 1000 à 3000 kg de l'électrode consommable secondaire sont fondus ;
diminuer le courant et ajuster la vitesse de fusion à une valeur comprise entre 3,0 et 7,5 kg/min lorsque le poids de l'électrode consommable secondaire restante est entre 2000 et 5500 kg ; et commencer la masselotte lorsque le poids de l'électrode consommable secondaire restante est entre 250 et 1500 kg ; et
après la seconde VAR, refroidir sous vide pendant 1 à 8 h, puis lancer le recuit de détente dans les 2 h, **en ce que** la température est augmentée à une valeur comprise entre 300 et 750 °C, maintenue constante pendant 4 à 32 h pour obtenir une répartition de température homogène, augmentée à une valeur comprise entre 800 et 1000 °C à une vitesse de 5 à 50 °C/h, maintenue constante pendant 4 à 32 h, abaissée à une valeur comprise entre 550 et 750 °C à une vitesse de 1 à 35 °C/h, et maintenue constante pendant 4 à 32 h, suivi d'un refroidissement à air ;
**en ce que** le lingot en superalliage de Nb est un alliage 706 ayant un diamètre égal ou supérieur à 800 mm, en pourcentage en masse, ayant une composition chimique de : C ≤ 0,02 %, Cr 15,5 à 16,5 %, Ni 40,0 à 43,0 %, Nb 2,8 à 3,2 %, Ti 1,5 à 1,8 %, Al 0,1 à 0,3 %, Si ≤ 0,10 %, Mn ≤ 0,20 %, P ≤ 0,015 %, S ≤ 0,0013 %, Co ≤ 0,30 %, Mo ≤ 0,20 %, B ≤ 0,006 %, Cu ≤ 0,30 %, Ca ≤ 0,005 %, N ≤ 0,006 %, O ≤ 0,005 %, et Fe le reste ; ou **en ce que** le lingot en superalliage de Nb est un alliage 718 ayant un diamètre égal ou supérieur à 800 mm, en pourcentage en masse, ayant une composition chimique de : C 0,005 à 0,04 %, Cr 17,0 à 19,0 %, Ni 52,0 à 55,05 %, Nb 4,9 à 5,5 %, Ti 0,75 à 1,15 %, Al 0,35 à 0,65 %, Si ≤ 0,10 %, Mn ≤ 0,15 %, P ≤ 0,008 %, S ≤ 0,002 %, Co ≤ 0,50 %, Mo 2,8 à 3,3 %, B ≤ 0,006 %, Cu ≤ 0,10 %, Ca ≤ 0,005 %, N ≤ 0,01 %, O ≤ 0,003 %, et Fe le reste.

2. Procédé de fusion selon la revendication 1, **caractérisé en ce que** la préparation de l'électrode sous laitier électroconducteur comprend un recuit de détente direct de chaque lingot VIM, au cours duquel la température est initialement augmentée à une valeur comprise entre 600 et 800 °C, puis augmentée à une valeur comprise entre 800 et 1000 °C à une vitesse de 5 à 45 °C/h, maintenue constante pendant 4 à 32 h, abaissée à une valeur comprise entre 600 et 800 °C à une vitesse de 1 à 35 °C/h et maintenue constante pendant 4 à 32 h ; refroidissement à air ; polissage ; et aplatissement au niveau de la tête et de la queue pour obtenir l'électrode sous laitier électroconducteur.

3. Procédé de fusion selon l'une des revendications 1 à 2, **caractérisé en ce que**, si la fluctuation de la vitesse de fusion pendant la seconde VAR est au-delà de ±10% de la vitesse de fusion permanente, un second lingot VAR obtenu est utilisé pour préparer une électrode consommable à utiliser pour une VAR suivante de la même manière que pour la préparation de l'électrode consommable primaire, y compris le même premier recuit, le second recuit, et le forgeage par étirage, puis la seconde VAR est répétée.
